# EUROPEAN PATENT APPLICATION

(11) **EP 4 316 721 A1**
(43) Date of publication of application: **07.02.2024**
(21) Application number: 22778539.1
(22) Date of filing: 14.03.2022
(51) Int. Cl.: B23K 20/10, B23K 20/26

(54) **ULTRASONIC WELDING MACHINE AND WELDING METHOD**

(30) Priority: 29.03.2021 CN 202110335859
(71) Applicant: SBT Ultrasonic Technology Co., Ltd, Shanghai 200240 (CN)
(72) Inventor: ZHOU, Hongjian, Shanghai 200240 (CN); SHI, Xinhua, Shanghai 200240 (CN)
(74) Representative: Grünecker Patent- und Rechtsanwälte PartG mbB
(86) International application number: PCT/CN2022/080629
(87) International publication number: WO 2022/206355

(57) **Abstract**

An ultrasonic welding machine, which is configured as: driving a triple assembly (2) to move in a Z direction by a multi-position cylinder (4) disposed on the ultrasonic welding machine, so as to achieve graded down pressing of a welding head (21) to prevent the workpiece to be welded from damage caused by possible situations where the welding head (21) first moves to a working position while a welding seat (3) has not reached a supporting position, which is due to the inability to strictly control the order of arrival at the working position of the welding head (21) and the welding seat (3) when the welding head (21) and the welding seat (3) move towards the working position simultaneously. An ultrasonic welding method is further related. The welding method using the ultrasonic welding machine significantly improves efficiency while ensuring welding quality.

## Description

### Technical Field

The present invention relates to an ultrasonic welding machine and a welding method.

### Background

Ultrasonic welding machine is a device that converts electrical energy into mechanical energy. It accomplishes the welding of workpieces by imparting highfrequency vibrations to the welding head, and causing friction between the contact surface of the welding head and the workpiece to generate the necessary heat for welding. During the ultrasonic welding process, the travel distance between the welding head and the welding seat can be relatively large to avoid fixtures or auxiliary structures sometimes. Therefore, cylinders on the existing ultrasonic welding machines will push the welding head down to the welding seat position to complete the welding operation. Due to the increased travel distance of the cylinder, the operating time for the cylinder is thereby increased, and the efficiency of the ultrasonic welding machine is thereby affected. In order to shorten the time for pressing down the welding head, an ultrasonic welding machine can simultaneously move the welding head and welding seat. However, for the ultrasonic welding machine allows the welding head and the welding seat to move simultaneously, the inventor recognized that due to the inability to strictly control the arrival sequence of the welding head and the welding seat, there may be a situation where the welding head arrives at the welding position before the welding seat, which can damage the workpiece to be welded. Therefore, these machines have to move the welding seat to the supporting position under the workpiece before welding, and then press the welding head down and moves above the workpiece to be weld for welding.

### Summary

The purpose of the present invention is to provide an ultrasonic welding machine and a welding method that can prevent the welding head from damaging the workpiece when both the welding head and the welding seat are moving towards the working position simultaneously.

According to the ultrasonic welding machine and the welding method of the present invention, the welding head can achieve a graded down pressing to make the welding head and the welding seat move simultaneously within a primary travel range before welding, as well as return to the initial positions simultaneously after welding.

The invention employs the following technical proposals:
One aspect of the present invention provides an ultrasonic welding machine, which comprises a machine frame, a triple assembly, a first driving assembly, a welding seat and a second driving assembly. The triple assembly comprises a welding head. The triple assembly is movably set on the machine frame so that the triple assembly can move along a Z direction. The first driving assembly is drivingly connected to the triple assembly. The first driving assembly is configured to drive the triple assembly to move to a preset position and a first working position. The second driving assembly is drivingly connected to the welding seat. The second driving assembly is configured to drive the welding seat to move to a second working position.

Another aspect of the present invention provides a welding method, which comprises steps:
S 1: placing a workpiece to be welded on a welding position of the ultrasonic welding machine;
S2: making a first driving assembly drive a triple assembly to move to a preset position, and simultaneously making a second driving assembly drive a welding seat to move to a second working position, so as to support the workpiece to be welded on the welding seat;
S3: making the first driving assembly drive the triple assembly to move to a first working position, so as to make a welding head of the triple assembly abut the workpiece to be welded;
S4: making the triple assembly drive the welding head to work.

As a preference, the welding method further comprises steps:
S5: after completing the welding, making the first driving assembly drive the triple assembly back to its initial position, and simultaneously making the second driving assembly drive the welding seat back to its initial position.

As a preference, the first driving assembly utilizes a multi-position cylinder.

As a preference, the ultrasonic welding machine further comprises:
a first sliding rail, set on the machine frame and extending along the Z direction;
a first slider, slideably disposed on the first sliding rail;
a first support plate, set on the first slider, wherein the triple assembly (2) is connected to the first support plate, and a power output end of the first driving assembly is drivingly connected to the first support plate.

As a preference, the ultrasonic welding machine further comprises:
a base, wherein the machine frame is supported on the base.

As a preference, the second driving assembly utilizes a cylinder, and the cylinder is movably set on the base.

As a preference, the ultrasonic welding machine further comprises:
a transmission assembly, wherein the welding seat is drivingly connected to the second driving assembly through the transmission assembly.

As a preference,the transmission assembly comprises a first connecting rod and a second connecting rod. One end of the second connecting rod is pivotally connected to the base. The other end of the second connecting rod is pivotally connected to the first connecting rod. The power output end of the cylinder is drivingly connected to a hinge joint of the first connecting rod and the second connecting rod, so as to allow the second connecting rod to rotate around its hinge point with the base. The end of the first connecting rod that is not pivotally connected to the second connecting rod is pivotally connected to the welding seat.

As a preference, the ultrasonic welding machine further comprises:
a second sliding rail, set on the machine frame and extending along the Z-direction;
a second slider, slideably disposed on the second sliding rail;
a second support plate, set on the second slider, wherein the welding seat is connected to the second support plate.

As a preference, the welding head is integrated with a wedge-reed welding head.

The beneficial effects of the present invention include:
For the welding method of the ultrasonic welding machine provide in the present invention, the ultrasonic welding machine comprises a machine frame, a triple assembly, a first driving assembly, a welding seat and a second driving assembly. The triple assembly comprises a welding head. The triple assembly is movably set on the machine frame so that the triple assembly can move along a Z direction. The first driving assembly is drivingly connected to the triple assembly. The first driving assembly can drive the triple assembly to move to a preset position and a first working position. The welding seat is movably set on the machine frame, and the welding seat can move along the Z direction. The second driving assembly is drivingly connected to the welding seat to drive the welding seat to move along the Z direction. The second driving assembly can drive the welding seat to move to a second working position. When the first driving assembly and the second driving assembly can simultaneously drive the triple assembly and the welding seat separately, to move the triple assembly to the preset position, and move the welding seat to the second working position, the workpiece to be welded can be supported on the welding seat. When the triple assembly move to the preset position, a certain distance between the welding head and the workpiece to be welded still exists, then the first driving assembly drives the triple assembly to move to the preset position to make the welding head of the triple assembly abut the workpiece to be welded, so as to perform the welding operation. The ultrasonic welding machine can achieve the graded down pressing of the welding head through the first driving assembly, so as to prevent the welding head from damaging the workpiece to be weld when simultaneously moving the welding head and the welding seat to the working position, thereby ensuring welding quality and enhancing welding efficiency in the same time. The welding method can achieve the graded down pressing of the welding head to solve the problem that the welding head and welding seat cannot move simultaneously before welding, thereby improving welding efficiency on the premise of ensuring welding quality.

### Brief Description of the Drawings

Fig. 1 is a schematic diagram of the ultrasonic welding machine provided in the present invention.
Fig. 2 is a flowchart of the welding method of the ultrasonic welding machine provided in the present invention.

In the figures:
1: a machine frame; 2: a triple assembly; 3: a welding seat; 4: a first driving assembly; 6: a base; 7: a transmission assembly; 21: a welding head; 71: a first connecting rod; 72: a second connecting rod.

### Detailed Description of Embodiments

In the description of the present invention, unless otherwise specified and limited, the terms "connecting", "connected" and "fixed" should be understood broadly. For example, it may be either a fixed connection, a detachable connection, or an integral connection. Besides, it may be either a direct connection, or an indirect connection through an intermediate medium. Unless otherwise specified and limited, when a first feature is described as "above" or "below" a second feature, it can include a direct contact between the first and second features, and an indirect contact through another feature between the first and second features. Additionally, when the first feature is described as "above", "upper" or "on top of" the second feature, it can refer to the first feature being directly above or at an inclined position above the second feature, or it can simply indicate that the first feature has a higher horizontal height than the second feature. When the first feature is described as "below", "lower" or "beneath" the second feature, it can refer to the first feature being directly below or at an inclined position below the second feature, or it can simply indicate that the first feature has a lower horizontal height than the second feature. Terms such as "up", "down", "right" and other positional relationships are based on the orientations or positional relationships shown in the figures, and are solely used for the purpose of description and simplification of operation. They do not indicate or imply that the device or component referred to must have a specific orientation, or be constructed or operated in a specific orientation. Therefore, it should not be understood as limiting the present invention. Furthermore, the terms "first" and "second" are solely used for distinguishing purposes in the description, and do not have any particular significance.

### Embodiment 1:

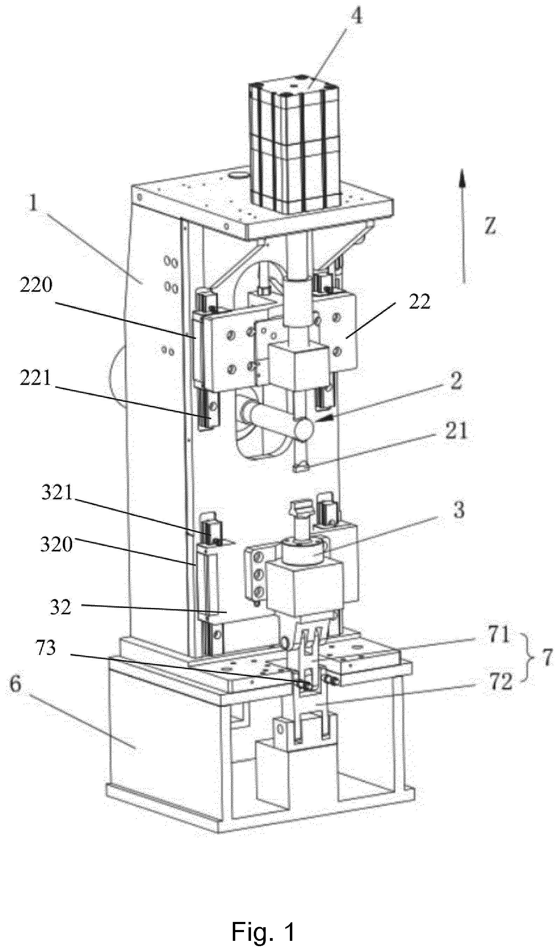

The embodiment provides an ultrasonic welding machine. As shown in Fig. 1, the ultrasonic welding machine comprises a machine frame 1, a triple assembly 2, a first driving assembly 4, a welding seat 3 and a second driving assembly (not shown in the figure). The triple assembly 2 comprises a welding head 21. The triple assembly 2 is movably set on the machine frame 1, so that the triple assembly 2 can move along a Z direction. The first driving assembly is drivingly connected to the triple assembly 2 to drive the triple assembly 2 move along the Z direction. The first driving assembly 4 can drive the triple assembly 2 to move to a preset position and a first working position. The welding seat 3 is movably set on the machine frame 1, so that the welding seat 3 can move along the Z direction. The second driving assembly is drivingly connected to the welding seat 3 to drive the welding seat 3 move along the Z direction. The second driving assembly can drive the welding seat 3 to move to a second working position. When the first driving assembly 4 and the second driving assembly can simultaneously drive the triple assembly 2 and the welding seat 3 separately to move the triple assembly 2 to a preset position, and move the welding seat 3 to the second working position, the workpiece to be welded is supported on the welding seat 3. When the triple assembly 2 move to the preset position, a certain distance between the welding head 21 and the workpiece to be welded still exists, then the first driving assembly 4 drives the triple assembly 2 to move to the preset position, so as to make the welding head 21 of the triple assembly 2 abut the workpiece to be welded to perform the welding operation. The ultrasonic welding machine can achieve the graded down pressing of the welding head 21 through the first driving assembly to prevent the welding head 21 from damaging the workpiece to be wield, when the welding head 21 and the welding seat 3 are moving to the working position simultaneously, thereby ensuring welding quality and enhancing welding efficiency in the same time.

In this embodiment, the first driving assembly 4 utilizes a multi-position cylinder to reach the first working position, so that the first driving assembly can drive the triple assembly 2 to move to the preset position, and then drive the triple assembly 2 to move to the first working position to achieve the graded down pressing of the welding head 21.

As shown in Fig. 1, the ultrasonic welding machine further comprises a first sliding rail 221, a first slider 220 and a first support plate 22. The first sliding rail is set on the machine frame 1 and extending along the Z direction. The first slider 220 is slideably disposed on the first sliding rail. The first support plate is set on the first slider. The triple assembly 2 is connected to the first support plate 22. A power output end of the multi-position cylinder 4 is drivingly connected to the first support plate 22 to drive the triple assembly 2 move along the Z direction. In addition, the ultrasonic welding machine further comprises a second sliding rail 321, a second slider 320 and a second support plate 32. The second sliding rail 321 is set on the machine frame 1 and extending along the Z-direction. The second slider 320 is slideably disposed on the second sliding rail 321. The second support plate 32 is set on the second slider. The welding seat 3 is connected to the second support plate 32 to drive the welding seat 3 move along the Z direction.

As shown in Fig. 1, the ultrasonic welding machine is further provided with a base 6. The machine frame 1 is supported on the base 6. In this embodiment, the second driving assembly utilizes a cylinder. Due to obstruction, the cylinder is not shown, and is movably set on the base 6. In the other embodiments, the second driving assembly can also utilizes an electric motor.

Alternatively, in order to transfer the driving force of the second driving assembly to the welding seat 3, the ultrasonic welding machine is further provided with a transmission assembly 7. The welding seat 3 is drivingly connected to the second driving assembly through the transmission assembly 7 to drive the welding seat 3 to move along the Z direction.

In the embodiment shown as the figure, the transmission assembly 7 comprises a first connecting rod 71 and a second connecting rod 72. One end of the second connecting rod 72 is pivotally connected to the base 6. The other end of the second connecting rod 72 is pivotally connected to the first connecting rod 71. The power output end of the cylinder is drivingly connected to a hinge joint of the first connecting rod 71 and the second connecting rod 72, so as to allow the second connecting rod 72 to rotate around its hinge point with the base 6. The figure does not show the cylinder or other form of the second driving component, whose power output end moves along the horizontal direction. For example, an output rod of the cylinder is arranged along the horizontal direction to perform a horizontal movement. The end of the first connecting rod 71, which is not pivotally connected to the second connecting rod 72, is pivotally connected to the welding seat 3. When the cylinder is driving, the first connecting rod 71 and the second connecting rod 72 move simultaneously, converting the horizontal movement output by the second driving assembly into a vertical movement of the welding seat 3 to make the welding seat 3 move closer to or away from the welding head 21. When the first connecting rod 71 and the second connecting rod 72 are aligned in a straight line without overlapping, a connecting rod structure formed by the first connecting rod 71 and the second connecting rod 72 is in a dead point position. At this moment, the welding seat 3 reaches the second working position and the supporting force of the welding seat 3 along the Z direction is maximum, so as to be capable of withstanding the vertical downward pressure of the welding head 21.

It needs to be mentioned that the triple assembly 2 in this embodiment is a wedge-reed welding head structure, wherein the welding head 21 is integrated with a wedge-reed welding head. The welding head 21 has a long service life and is easy to install. In other embodiments, a conventional lateral-drive triple assembly can also be used.

### Embodiment 2:

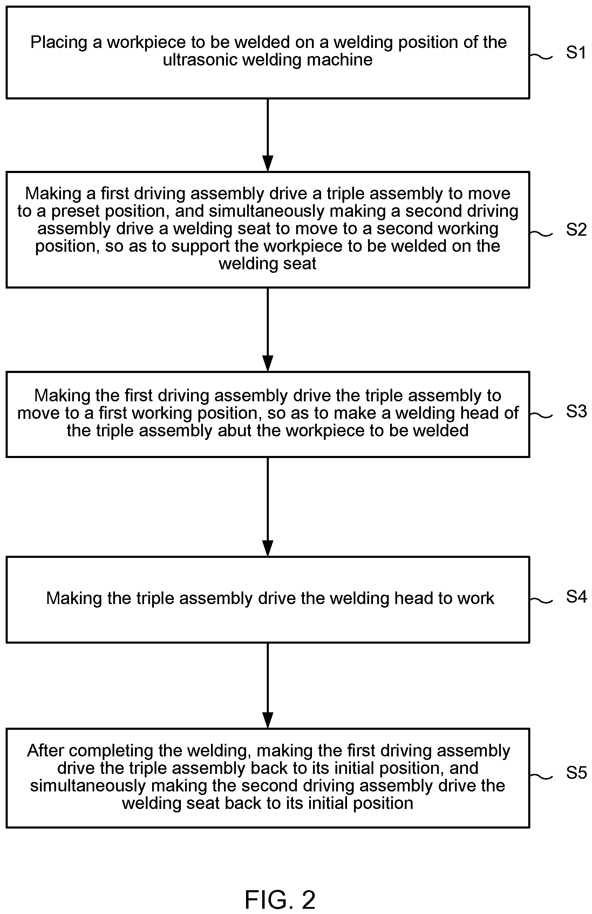

This embodiment provides a welding method. The welding method utilizes the ultrasonic welding machine according to the embodiment 1. As shown in Fig. 2, the welding method comprises steps:
S 1: placing a workpiece to be welded on a welding position of the ultrasonic welding machine;
S2: making a first driving assembly drive a triple assembly 2 to move to a preset position, and simultaneously making a second driving assembly drive a welding seat 3 to move to a second working position, so as to support the workpiece to be welded on the welding seat 3;
S3: making the first driving assembly drive the triple assembly 2 to move to a first working position, so as to make a welding head 21 of the triple assembly 2 abut the workpiece to be welded;
S4: making the triple assembly 2 drive the welding head 21 to work, so as to make the welding head 21perform a welding process to the workpiece to be wield;
S5: after completing the welding, making the first driving assembly drive the triple assembly 2 back to its initial position, and simultaneously making the second driving assembly drive the welding seat 3 back to its initial position.

It needs to be mentioned that when the triple assembly 2 move to the preset position, a certain distance between the welding head 21 and the workpiece to be welded still exists.

The welding method can achieve the graded down pressing of the welding head 21, so as to prevent the workpiece to be wield from damage, caused by the situation where the welding head 21 first moves to the working position, due to the inability of welding head 21 and welding seat 3 to move synchronously, when the welding head 21 and the welding seat 3 are moving towards the working position simultaneously, thereby ensuring welding quality while enhancing welding efficiency.

Obviously, the above-described embodiments of the present invention are merely provided for the purpose of illustrating the invention, and are not intended to limit the implementation of the invention. For those skilled in the art in the relevant field, it is possible to make various evident modifications, reconfigurations and substitutions without departing from the scope of protection of the present invention. For example, in another embodiment, the first driving assembly 4 is located at the bottom of the ultrasonic welding machine, and correspondingly, the welding head 21 is positioned below while the welding seat 3 is positioned above.

It is neither necessary nor possible to exhaustively enumerate all possible embodiments here. Any modifications, equivalent substitutions, improvements and the like made within the spirit and principles of the present invention should be included within the scope of protection of the claims of the present invention.

## Claims

1. An ultrasonic welding machine, comprising a machine frame (1), a triple assembly (2), a first driving assembly, a welding seat (3), and a second driving assembly, wherein the triple assembly (2) comprises a welding head (21), and the triple assembly (2) is movably set on the machine frame (1) so that the triple assembly (2) can move along a Z direction; the first driving assembly is drivingly connected to the triple assembly (2), and the second driving assembly is drivingly connected to the welding seat (3); the ultrasonic welding machine is **characterized in that**,
the first driving assembly is configured to drive the triple assembly (2) to move to a preset position and a first working position;
the second driving assembly is configured to drive the welding seat (3) to move to a second working position to support the workpiece to be welded;
when the first driving assembly drives the triple assembly (2) to move to the preset position, and the second driving assembly drives the welding seat (3) to move to the second working position, a certain distance between the welding head and the workpiece to be welded still exists;
when the first driving assembly drives the triple assembly (2) to move to the first working position, the welding head (21) of the triple assembly (2) abuts the workpiece to be welded.

2. The ultrasonic welding machine of claim 1, wherein the first driving assembly is a multi-position cylinder (4).

3. The ultrasonic welding machine of claim 1, wherein the ultrasonic welding machine further comprises:
a first sliding rail disposed on the machine frame (1) and extending along the Z direction;
a first slider slideably disposed on the first sliding rail;
a first support plate, set on the first slider, wherein the triple assembly (2) is connected to the first support plate, and a power output end of the first driving assembly is drivingly connected to the first support plate.

4. The ultrasonic welding machine of claim 1, wherein the ultrasonic welding machine further comprises a base (6) on which the machine frame (1) is supported;
the second driving assembly is a cylinder, and the cylinder is movably set on the base (6).

5. The ultrasonic welding machine of claim 4, wherein the ultrasonic welding machine further comprises:
a transmission assembly (7) through which the welding seat (3) is drivingly connected to the second driving assembly.

6. The ultrasonic welding machine of claim 5, wherein the transmission assembly (7) comprises a first connecting rod (71) and a second connecting rod (72), one end of the second connecting rod (72) is pivotally connected to the base (6), the other end of the second connecting rod (72) is pivotally connected to the first connecting rod (71), and the power output end of the second driving assembly is drivingly connected to a hinge joint of the first connecting rod (71) and the second connecting rod (72), so as to allow the second connecting rod (72) to rotate around its hinge point with the base (6); the end of the first connecting rod (71) which is not pivotally connected to the second connecting rod (72) is pivotally connected to the welding seat (3).

7. The ultrasonic welding machine of claim 6, wherein when the first connecting rod (71) and the second connecting rod (72) are aligned in a straight line without overlapping, a connecting rod structure formed by the first connecting rod (71) and the second connecting rod (72) is in a dead point position, at this moment, the welding seat reaches the second working position.

8. The ultrasonic welding machine of anyone of claims 1 to 6, wherein the ultrasonic welding machine further comprises:
a second sliding rail disposed on the machine frame (1) and extending along the Z-direction;
a second slider slideably disposed on the second sliding rail;
a second support plate disposed on the second slider, wherein the welding seat (3) is connected to the second support plate.

9. The ultrasonic welding machine of anyone of claims 1 to 6, wherein the welding head (21) is a wedge-reed welding head.

10. A welding method, utilizing the ultrasonic welding machine of anyone of claims 1 to 8, wherein the welding method comprises steps:
S1: placing a workpiece to be welded on a welding position of the ultrasonic welding machine;
S2: making a first driving assembly drive a triple assembly (2) to move to a preset position, and simultaneously making a second driving assembly drive a welding seat (3) to move to a second working position, so as to support the workpiece to be welded on the welding seat (3);
S3: making the first driving assembly drive the triple assembly (2) to move to a first working position, so as to make a welding head (21) of the triple assembly (2) abut the workpiece to be welded;
S4: making the triple assembly (2) drive the welding head (21) to work.

11. The welding method of claim 10, wherein the welding method further comprises a step:
S5: after completing the welding, making the first driving assembly drive the triple assembly (2) back to its initial position, and simultaneously making the second driving assembly drive the welding seat (3) back to its initial position.
